Europäisches Patentamt

European Patent Office

Office européen des brevets

(11) Publication number: **0 100 580**
**B1**

(12) **EUROPEAN PATENT SPECIFICATION**

(45) Date of publication of patent specification: **28.05.86**

(21) Application number: **83201147.2**

(22) Date of filing: **01.08.83**

(51) Int. Cl.⁴: **F 16 L 58/10, F 16 L 23/04, F 16 L 58/18**

(54) **Plastic lined pipe joint and method of joining.**

(30) Priority: **02.08.82 US 404267**

(43) Date of publication of application:
**15.02.84 Bulletin 84/07**

(45) Publication of the grant of the patent:
**28.05.86 Bulletin 86/22**

(84) Designated Contracting States:
**BE DE FR IT NL**

(56) References cited:
**DE-A-2 425 637**
**US-A-3 828 823**
**US-A-4 214 019**
**US-A-4 215 159**
**US-A-4 217 376**
**US-A-4 283 317**
**US-A-4 313 625**

(73) Proprietor: **THE DOW CHEMICAL COMPANY**
**2030 Dow Center Abbott Road P.O. Box 1967**
**Midland, MI 48640 (US)**

(72) Inventor: **Prueter, Elton Delmont**
**1400 Riser**
**Saginaw Michigan 48603 (US)**

(74) Representative: **Urbanus, Henricus Maria, Ir.
et al
c/o Vereenigde Octrooibureaux Nieuwe
Parklaan 107
NL-2587 BP 's-Gravenhage (NL)**

Courier Press, Leamington Spa, England.

## Description

For many years pipes and like conduits have been employed to transport liquids of varying corrosive nature. Oftentimes materials which provide the desired resistance to corrosion do not provide adequate physical properties to resist the stresses normally applied to a pipe or similar conduit. Therefore, two-layer conduits have been employed wherein a corrosion resistant lining is applied to a conduit having the desired physical resistance, for example, rubber lined steel or wood lined steel pipe. Of considerable commercial importance are plastic lined steel pipes. Some such pipes are lined with a thermoset resin while others are lined with thermoplastic resins. For many applications a particularly desirable combination is a lined pipe suitable for relatively low pressure operations and of a sufficient light weight so that it is more readily handled than standard pipe.

Plastic lined pipe may be joined in a variety of ways. One highly desirable joint is prepared by removing a terminal portion of the pipe, applying a flange to the pipe and subsequently flanging the protruding liner to conform to the flange. Such techniques are disclosed in U.S. Patent Nos. 3,335,484; 3,383,750; 3,390,442; 3,448,491; 3,461,505; 3,650,550. Means of joining such pipes are disclosed in U.S. Patent Nos. 3,284,107 and 3,284. Light weight plastic lined pipe is disclosed in U.S. Patent Nos. 3,838,823 and 3,742,590. A particularly convenient means of flaring both pipe and liner simultaneously is disclosed in U.S Patent No. 3,744,115.

A very desirable means of joining lined pipe is disclosed in U.S. Patent No. 4,313,625 which makes use of a loose ring having a tapered surface disposed behind the flanges of the pipes to be joined. The loose ring is engaged by split "V" clamp to provide the desired force to draw the pipe flanges together. However, the loose ring of U.S. Patent 4,313,625 can cause problems in assembly on a vertical run of joined pipes and particularly where the ring and the pipe define fissures or spaces therebetween where corrosive materials can collect unnoticed.

It would be desirable if there were available an improved lined pipe assembly which can be readily formed regardless of the orientation of the pipe or pipes to be joined.

These benefits and other advantages are achieved in a pipe joint comprising a plastic lined conduit having a synthetic resinous pressure deformable liner disposed within a pressure deformable metal conduit, said plastic lined conduit having at least one end defining a radially outwardly projecting flange composed of deformed metal of the metal conduit and deformed plastic of the liner, a loose ring having a generally planar face and a tapering face and disposed about the conduit with the planar face disposed against the outwardly projecting flange of the metal conduit, the tapering face of the loose ring being remote from the radially outwardly projecting metal flange and tapering outwardly toward a periphery of the flange, a split "V" clamp disposed about the loose ring said "V" clamp having an opposed tapering surface engageable with the tapering face of the loose ring for forcing the plastic liner flange against an opposed liner flange engaging sealing surface, characterized by an adhesive sealer disposing between the loose ring and the adjacent pipe flange, said sealer being present in a quantity sufficient to adhere the loose ring to the conduit flange and fill any space which may be defined between the loose ring and adjacent conduit flange.

Also contemplated within the scope of the present invention is a method of forming a flange on a terminal end of a plastic lined conduit comprising a synthetic resinous pressure deformable liner disposed within a pressure deformable metal conduit, comprising the steps of positioning on said metal conduit a loose ring said loose ring being adapted to engage a split "V" clamp, hydraulically deforming the end of the plastic lined conduit to form a generally outwardly radially extending annular flange on the metal conduit and, on release of the hydraulic pressure, the flange of the liner extending primarily radially and to a lesser degree axially, the flanges of the liner and the metal conduit defining a space therebetween, rotating the lined conduit while applying a heated gas to the flange of the liner, the heated gas being applied for a sufficient time to heat plastify the liner flange, and characterized by the steps of applying an adhesive sealer between the loose ring and the flange of the metal conduit, pressing the liner flange against the metal conduit flange while forcing the loose ring against the metal conduit flange to thereby cause the adhesive sealer to fill any void defined by the loose ring and the conduit flange, cooling the liner flange below its heat plastifying temperature and removing a means to press the liner flange against the conduit flange.

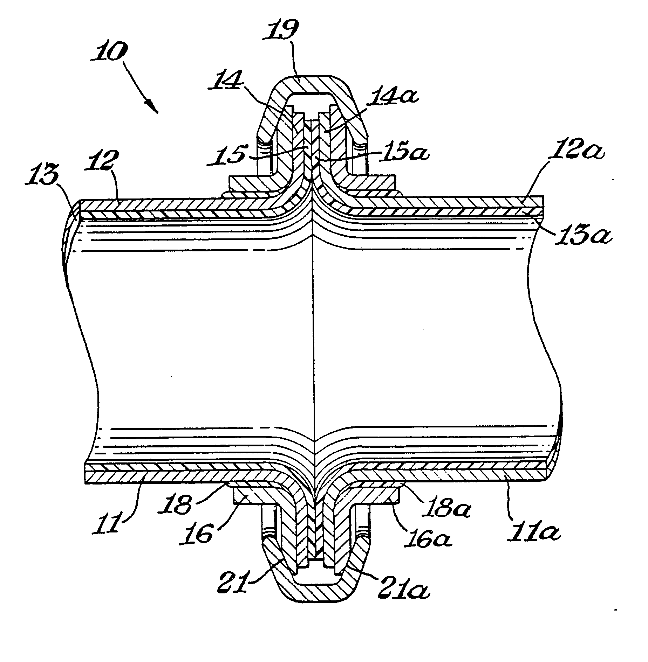

Further features and advantages of the present invention will become more apparent from the following specification taken in connection with the drawing wherein the single Figure depicts a sectional view of a pipe joint in accordance with the present invention.

The pipe joint generally designated by the reference numeral 10 has a first conduit 11 and a second conduit 11a. The conduits 11 and 11a are deformable metal conduits 12 and 12a, respectively, having disposed therein synthetic resinous heat deformable liners 13 and 13a, respectively. The terminal portions of the metal conduits 12 and 12a define radially outwardly extending flanges 14 and 14a while the liners 13 and 13a terminate in radially outwardly extending flanges 15 and 15a, respectively. Each of the flanges 14 and 14a have associated therewith loose rings 16 and 16a. The loose rings 16 and 16a are disposed remote from the liner flanges 15 and 15a, respectively. Bodies of adhesive sealer 18 and 18a fill any fissures or spaces defined between the loose rings and the associated flange. A split "V" clamp 19 engages tapered faces 21 and 21a of the loose rings 16 and 16a, respectively. The action of split "V" clamp is such that on tightening the loose rings 16 and 16a are drawn together to provide sealing contact between the liner flanges 15 and 15a.

In preparing joints in accordance with the present invention, the loose ring is first positioned about the conduit with the tapered face 21 or 21a, oriented remote from the terminal end of the conduit. The conduit is then flanged. A particularly desirable method of flanging both the metal conduit and the liner is set forth in U.S. Patent No. 3,744,115. In many instances the flange of the liner 15 or 15a, will move away from the metal conduit flange 14 or 14a, and define a generally annular space between the flange of the conduit and the flange of the liner, such annular space having a generally wedge-shaped cross-sectional configuration. The thicker portion of the wedge-shaped space is remote from the axis of the conduit and the narrower portion of the wedge-shaped space is disposed toward the axis of the conduit. The liner flange 15 or 15a, is then heated to a temperature sufficient to heat soften or plastify the flange to a degree sufficient so that when forced into contact with the flange 14 or 14a of the metal conduit, the liner flange will remain in position against the conduit flange. Heating of the flange beneficially is accomplished by using a hot gas such as air. A desirable manner of heating the liner flange is to provide a blast of hot air against the liner portion extending from the metal conduit and rotate the lined conduit until the liner flange has been more or less evenly heated to the desired temperature. The heat plastified liner flange is then clamped against the conduit flange and permitted to cool. Such clamping is readily accomplished by employing a metal plate, for example, a steel plate.

Conduit lining materials are, for example, polytetrafluoroethylene (PTFE), copolymers of PTFE, polyvinylidene fluoride, polyvinylidene chloride or polypropylene. Any polymer, including the above preferred polymers, which can be heat plastified can be flanged in the manner hereinbefore described.

An appropriate sealant is then applied between the loose ring 16 and 16a, and the adjacent flange 14 or 14a. Advantageously, the adhesive sealer is applied to a space between the loose ring and its adjacent flange during the heating of the heat plastifiable liner flange 15 and 15a, and simultaneously the liner is forced against its adjacent conduit flange and the loose ring forced against the conduit flange. The adhesive sealer may be any one of a variety of sealer materials and depend upon the application of the lined conduit. Hot melt adhesives are particularly desirable; however, they should have a softening point such that no dripping or movement of the adhesive sealer is observable at the operating temperature of the lined conduit when placed into service. A wide variety of useable hot melt adhesives are known to be useful in the practice of the present invention. Some of such hot melt adhesives are set forth in U.S. Patents 4,140,733; 4,141,744; 4,146,586; 4,148,775; 4,200,676; 4,214,019; 4,215,159; 4,217,376; 4,219,458; 4,219,459; 4,219,460; 4,222,976; 4,252,712; 4,283,317; 4,284,542; 4,289,669; 4,304,697.

Epoxy adhesives sealers are also usable in the practice of the invention, such as are set forth, for example, in U.S. Patents: 3,891,583; 3,945,971; 3,943,104; 4,110,313; and 4,117,038.

To ensure electrical conductivity between joined plastic lined pipe sections for cathodic protection, it is desirable to use adhesive sealers which are electrically conductive. Normally, synthetic resinous sealing materials are nonconductive and thus prevent an electrical current to flow from one pipe section to the next when applied in the manner disclosed in the present invention. More particularly, the sealing material when applied between the metal pipe flanges 16 and 16a and the loose rings 16 and 16a would flow between the surfaces of the flanges and loose rings to coat the surfaces, thus forming an electrical insulator between the joined pipe sections to prevent an electrical current from flowing through a plurality of interconnected pipe sections. Electrically conductive adhesive sealers which may be employed in the invention include, for example, graphite filled synthetic resinous materials; resinous materials having metal in the form of a powder, fibers or particles dispersed therein; conductive inserts such as metal washers which may be perforated and expanded to form an expanded mesh. Synthetic resinous materials which are electrically conductive per se may also be used in the practice of the invention.

Conduits prepared in accordance with the foregoing are easily handled in the field, assembled in any position because of the loose ring being adhered to its associated conduit flange. As the adhesive sealer is disposed between the loose ring and the associated flange, accumulation of corrosive material between the loose ring and the flange is eliminated.

**Claims**

1. A pipe joint (10) comprising a plastic lined conduit (11, 11a) having a synthetic resinous pressure deformable liner (13, 13a) disposed within a pressure deformable metal conduit (12, 12a), said plastic lined conduit having at least one end defining a radially outwardly projecting flange composed of deformed metal (14, 14a) of the metal conduit and deformed plastic (15, 15a) of the liner, a loose ring (16, 16a) having a generally planar face and a tapering face (21, 21a) and disposed about the conduit with the planar face disposed against the outwardly projecting flange of the metal conduit, the tapering face of the loose ring being remote from the radially outwardly projecting metal flange and tapering outwardly toward a periphery of the flange and tapering outwardly toward a periphery of the flange, a split "V" clamp (19) disposed about the loose ring said "V" clamp having an opposed tapering surface engageable with the tapering face of the loose ring for forcing the plastic liner flange against an opposed liner flange engaging sealing surface, characterised by an adhesive sealer (18, 18a) disposing between the loose ring and the adjacent pipe flange, said sealer being present in a quantity sufficient to adhere the loose ring to the conduit flange and fill any space which may be defined between the loose ring and adjacent conduit flange.

2. The pipe joint of Claim 1 wherein the adhesive sealer is a hot melt adhesive.

3. The pipe joint of Claim 1 wherein the adhesive sealer is an epoxy resin.

4. The pipe joint of Claim 1 wherein the adhesive sealer is electrically conductive.

5. The pipe joint of Claim 1, or 2 or 3, wherein the adhesive sealer is provided with an electrically conductive material.

6. The pipe joint of Claim 5, wherein the electrically conductive material is a metal powder or particulate dispersed in said adhesive sealer.

7. The pipe joint of Claim 5, wherein the electrically conductive material is perforated metal washer or an expanded mesh metal insert.

8. A method of forming a flange on a terminal end of a plastic lined conduit (11, 11a) comprising a synthetic resinous pressure deformable liner (13, 13a) disposed within a pressure deformable metal conduit (12, 12a), comprising the steps of positioning on said metal conduit a loose ring (16, 16a) said loose ring being adapted to engage a split "V" clamp (19), hydraulically deforming the end of the plastic lined conduit to form a generally outwardly radially extending annular flange (14, 14a) on the metal conduit and, on release of the hydraulic pressure, the flange (15, 15a) of the liner extending primarily radially and to a lesser degree axially, the flanges of the liner and the metal conduit defining a space therebetween, rotating the lined conduit while applying a heated gas to the flange of the liner, the heated gas being applied for a sufficient time to heat plastify the liner flange, and characterized by the steps of applying an adhesive sealer (18, 18a) between the loose ring and the flange of the metal conduit, pressing the liner flange against the metal conduit flange while forcing the loose ring against the metal conduit flange to thereby cause the adhesive sealer to fill any void defined by the loose ring and the conduit flange, cooling the liner flange below its heat plastifying temperature and removing a means to press the liner flange against the conduit flange.

9. The method of Claim 8 wherein the adhesive sealer is selected from a hot melt adhesive or an epoxy resin.

10. The method of Claim 8 wherein the adhesive sealer is electrically conductive.

11. The method of Claim 8 wherein the adhesive sealer is provided with an electrically conductive material selected from metal or graphite.

## Patentansprüche

1. Rohrverbindung (10), enthaltend ein mit Kunststoff ausgekleidetes Rohr (11, 11a) mit einer durch Druck verformbaren Auskleidung (13, 13a) aus synthetischem Harz in einem durch Druck verformbaren Metallrohr (12, 12a), wobei das mit Kunststoff ausgekleidete Rohr mindestens ein Ende mit einem sich radial nach außen erstreckenden Flansch aus verformtem Metall (14, 14a) des Metallrohres und der verformten Kunststoffauskleidung (15, 15a) aufweist, mit einem losen Ring (16, 16a) mit einer im allgemeinen flachen Seitenfläche und einer konischen Stirnseite (21, 21a), der über dem Rohr mit der flachen Seitenfläche gegen den sich nach außen erstreckenden Flansch des Metallrohres angeordnet ist und wobei die konische Stirnseite des losen Ringes vom sich radial nach außen zum Umfang des Flansches verjüngt, mit einer V-förmigen Schellenklemme (19), die über dem losen Ring angeordnet ist, wobei die V-förmige Klemme eine Oberfläche entgegensetzter Konizität zum Eingriff mit der konischen Stirnseite des losen Ringes zum Anpressen des mit Kunststoff ausgekleideten Flansches an die dichtende Oberfläche eines gegenüberliegenden ausgekleideten Flansches aufweist, dadurch gekennzeichnet, daß eine Klebstoffdichtung (18, 18a) zwischen dem losen Ring und dem benachbarten Rohrflansch angeordnet ist, wobei die Klebstoffdichtung in einer ausreichenden Menge vorhanden ist, um den losen Ring am Rohrflansch zu befestigen und um alle Zwischenräume zwischen dem losen Ring und dem benachbarten Rohrflansch auszufüllen.

2. Rohrverbindung nach Anspruch 1, dadurch gekennzeichnet, daß die Klebstoffdichtung ein Heißschmelzkleber ist.

3 Rohrverbindung nach Anspruch 1, dadurch gekennzeichnet, daß die Klebstoffdichtung ein Epoxyharz ist.

4. Rohrverbindung nach Anspruch 1, dadurch gekennzeichnet, daß die Klebstoffdichtung elektrisch leitend ist.

5. Rohrverbindung nach Anspruchen 1, 2 oder 3, dadurch gekennzeichnet, daß die Klebstoffdichtung mit elektrisch leitendem Material versehen ist.

6. Rohrverbindung nach Anspruch 5, dadurch gekennzeichnet, daß das elektrisch leitende Material in der Klebstoffdichtung dispergiertes Metallpulver oder Metallteilchen ist.

7. Rohrverbindung nach Anspruch 5, dadurch gekennzeichnet, daß das elektrisch leitende Material eine gelochte Metallunterlegscheibe oder ein Gittereinsatz aus Streckmetall ist.

8. Verfahren zum Formen eines Flansches an einem Ende eines mit Kunststoff ausgekleideten Rohres (11, 11a) mit einer durch Druck verformbaren Auskleidung (13, 13a) aus synthetischem Harz in einem durch Druck verformbaren Metallrohr (12, 12a) mit den Schritten Anordnen eines losen Ringes (16, 16a) auf dem Metallrohr, wobei der lose Ring zum Eingriff mit einer V-förmigen Schellenklemme (19) ausgebildet ist, hydraulisches Verformen des Endes des mit Kunststoff ausgekleideten Rohres um einen im allgemeinen sich radial nach außen erstreckenden runden Flansch (14, 14a) am Metallrohr auszubilden, wobei sich der Flansch (15, 15a) der Auskleidung bei Entlasten vom hydraulischen Druck überwiegend radial und zu einem kleineren Teil axial erstreckt und zwischen den Flanschen der Auskleidung und des Metallrohres ein Zwischenraum vorhanden ist, Drehen des ausgekleideten Rohres während der Flansch der Auskleidung mit heißem Gas beaufschlagt wird, wobei die Beaufschlagung mit heißem Gas für eine ausreichende Zeit erfolgt, um die Auskleidung thermoplastisch zu machen, gekennzeichnet durch die Schritte, Aufbringen einer Klebstoffdichtung (18, 18a) zwischen dem losen Ring und dem Flansch des Metallrohres, Anpressen des Flansches der Auskleidung an den Flansch des Metallrohres, während der lose Ring gegen den Flansch des Metallrohres gedrückt wird, um dadurch jeden Hohlraum zwischen dem losen Ring und dem Rohrflansch mit Klebstoffdichtung auszufüllen, Abkühlen des Flansches der Auskleidung unter die Temperatur des thermoplastischen Zustandes und Entfernen der Mittel, die den Flansch der Auskleidung gegen den Rohrflansch drücken.

9. Verfahren nach Anspruch 8, dadurch gekennzeichnet, daß man als Klebstoffdichtung einen Heißschmelzkleber oder ein Epoxyharz verwendet.

10. Verfahren nach Anspruch 8, dadurch gekennzeichnet, daß die Klebstoffdichtung elektrisch leitend ist.

11. Verfahren nach Anspruch 8, dadurch gekennzeichnet, daß die Klebstoffdichtung mit Metall oder Graphit als elektrisch leitendem Material versehen ist.

**Revendications**

1. Un raccord de tuyaux (10) comprenant un conduit revêtu plastique (11, 11a) qui comporte un revêtement en résine synthétique déformable sous l'effet de la pression (13, 13a) disposé à l'intérieur d'un conduit en métal déformable sous l'effet de la pression (12, 12a), ce conduit revêtu de matière plastique ayant au moins une extrémité qui définit une bride faisant saillie radialement vers l'extérieur, constituée par du métal déformé (14, 14a) du conduit en métal et par de la matière plastique déformé (15, 15a) du revêtement, un anneau libre (16, 16a) ayant une face de forme générale plane et une face biseautée (21, 21a), et placé autour du conduit avec la face plane placée contre la bride faisant saillie vers l'extérieur du conduit en métal, la face biseautée de l'anneau libre étant éloignée de la bride en métal faisant saillie radialement vers l'extérieur et allant en diminuant vers l'extérieur en direction d'une périphérie de la bride, un collier en "V" fendu (19) disposé autour de l'anneau libre, ce collier en "V" comportant une surface inclinée en regard qui pour venir en contact avec la face biseautée de l'anneau libre pour appliquer de force la bride du revêtement en matière plastique contre une surface d'étanchéité en regard venant en contact avec la bride du revêtement, caractérisé par la présence d'une matière d'étanchéité adhésive (18, 18a) disposée entre l'anneau libre et la bride de tuyau adjacente, cette matière d'étanchéité étant présente en une quantité suffisante pour faire adhérer l'anneau libre à la bride du conduit et pour emplir tout espace susceptible d'être formé entre l'anneau libre et la bride adjacente du conduit.

2. Le raccord de tuyaux de la revendication 1, dans lequel la matière d'étanchéité adhésive est une adhésif thermofusible.

3. Le raccord de tuyaux de la revendication 1, dans lequel la matière d'étanchéité adhésive est une résine époxyde.

4. Le raccord de tuyaux de la revendication 1, dans lequel la matière d'étanchéité adhésive est conductrice de l'électricité.

5. Le raccord de tuyaux de la revendication 1, 2 ou 3, dans lequel la matière d'étanchéité adhésive comporte un matière conductrice de l'électricité.

6. Le raccord de tuyaux de la revendication 5, dans lequel la matière conductrice de l'électricité est constituée par une poudre ou des particules métalliques dispersées dans la matière d'étanchéité adhésive.

7. Le raccord de tuyaux de la revendication 5, dans lequel la matière conductrice de l'électricité consiste en une rondelle métallique perforée ou en un élément rapporté consistant en un treillis en métal déployé.

8. Un procédé de formation d'une bride sur une extrémité d'un conduit revêtu de matière plastique (11, 11a), comprenant un revêtement en résine synthétique déformable sous l'effet de la pression (13, 13a) placé à l'intérieur d'un conduit en métal déformable sous l'effet de la pression (12, 12a), comprenant les opérations qui consistent à placer sur le conduit en métal un anneau libre (16, 16a) qui est conçu de façon à venir en contact avec un collier en "V" fendu (19), à déformer par des moyens hydrauliques l'extrémité du conduit revêtu de matière plastique, pour former sur le conduit en métal une bride annulaire (14, 14a) s'étendant de façon générale radialement vers l'extérieur et, au moment du relâchement de la pression hydraulique, la bride (15, 15a) du revêtement s'étendant essentiellement en direction radiale et dans une moindre mesure en direction axiale, les brides du revêtement et du conduit en métal définissant un espace entre elles, à faire tourner le conduit revêtu tout en appliquant un gaz chauffé à la bride du revêtement, le gaz chauffé étant appliqué pendant une durée suffisante pour que la bride du revêtement devienne plastique sous l'effet de la chaleur, et caractérisé par les opérations consistant à appliquer une matière d'étanchéité adhésive (18, 18a) entre l'anneau libre et la bride du conduit en métal, à appliquer la bride du revêtement contre la bride du conduit en métal, tout en appliquant de force l'anneau libre contre la bride du conduit en métal, pour que la matière d'étanchéité adhésive emplisse ainsi tout vide formé par l'anneau libre et la bride du conduit, à refroidir la bride du revêtement au-dessous de sa température correspondant à l'etat plastique, et à enlever des moyens destinés à appliquer la bride du revêtement contre la bride du conduit.

9. Le procédé de la revendication 8, dans lequel on choisit la matière d'étanchéité adhésive parmi un adhésif thermofusible ou une résine époxy.

10. Le procédé de la revendication 8, dans lequel la matière d'étanchéité adhésive est conductrice de l'électricité.

11. Le procédé de la revendication 8, dans lequel la matière d'étanchéité adhésive comporte une matière conductrice de l'électricité choisie entre un métal ou le graphite.